# EUROPÄISCHE PATENTANMELDUNG

(11) **EP 4 852 286 A1**
(43) Veröffentlichungstag der Anmeldung: **09.12.2026**
(21) Anmeldenummer: 26169794.0
(22) Anmeldetag: 31.03.2026
(51) Int. Cl.: H02K 15/043

(54) **VORRICHTUNG UND VERFAHREN ZUM EINBRINGEN EINER WICKELMATTE IN EIN ÜBERTRAGUNGSWERKZEUG**

(30) Priorität: 02.06.2025 DE 102025121359
(71) Anmelder: Aumann Espelkamp GmbH, 32339 Espelkamp (DE)
(72) Erfinder: HAGEDORN, Jürgen, Lübbecke (DE); SMULCZYNSKI, Marc, Rahden (DE)
(74) Vertreter: Schlegel, Sebastian

(57) **Zusammenfassung**

Eine Vorrichtung (1) zum Einbringen einer Wickelmatte (2) in ein rotierbares Übertragungswerkzeug (3) umfasst ein erstes bandförmiges Transportmittel (5) zum Heranführen der Wickelmatte (2) an das Übertragungswerkzeug (3), wobei das erste bandförmige Transportmittel (5) eine ebene Transportseite (51) zum Kontaktieren der Wickelmatte (2) aufweist; eine Umlenkeinrichtung (8), die dazu ausgelegt ist, die Wickelmatte (2) in einem vorbestimmten Umfangsabschnitt in ein einem Kontakteingriff mit dem Übertragungswerkzeug (3) zu halten; und wenigstens eine Einpresseinrichtung (9), die dazu ausgelegt ist, die Wickelmatte (2) in das Übertragungswerkzeug (3) hinein zu drängen.

## Beschreibung

Die Erfindung betrifft eine Vorrichtung und ein Verfahren zum Einbringen einer Wickelmatte in ein Übertragungswerkzeug.

### Hintergrund

Das Einbringen einer Wickelmatte in den Stator oder Rotor erfolgt üblicherweise mithilfe eines Innenwerkzeugs (Übertragungswerkzeug), in das zuvor eine Wickelmatte eingebracht worden ist. Dazu wird zunächst eine flache Wickelmatte gebildet und in ein lineares Transportmittel eingelegt, das Aufnahmen hat, die entsprechend der Teilung der Wickelmattenstränge verteilt sind. Die Breite der Aufnahmen ist im Allgemeinen an den Querschnitt der Wickelmattenstränge angepasst. Als lineare Transportmittel kommen Zahnstangen oder Zahnriemen zum Einsatz, deren Zahnlücken Aufnahmen für die Stränge der Wickelmatte bilden. Von dem linearen Transportmittel wird die Wickelmatte einem Innenwerkzeug formschlüssig zugeführt. Der Formschluss dient der Positionsübergabe zwischen einem linearen Transportmittel und dem rotierenden Innenwerkzeug bezogen auf die einzelnen Wicklungsstränge der Wickelmatte.

Bekannte Verfahren und Vorrichtungen zur Herstellung von Rotoren oder Statoren von elektrischen Maschinen werden zum Beispiel in EP 3 930 149 A1, EP 3 384 582 B1 und EP 4 123 878 A1 beschrieben.

Um mit einem solchen System verschiedene Wickelmatten mit unterschiedlicher Teilung herzustellen, oder wenn verschiedene Wickelmatten mit unterschiedlichen Drahtquerschnitten oder Wickelmattenbreiten der Wicklungsstränge hergestellt werden sollen, muss das gesamte System, also sowohl das lineare Transportmittel als auch das Innenwerkzeug, durch ein passendes ausgetauscht werden.

### Zusammenfassung

Aufgabe der Erfindung ist es, die Nachteile des Stands der Technik zu überwinden und insbesondere ein System und ein Verfahren zum Einbringen einer Wickelmatte in ein Übertragungswerkzeug bereitzustellen, das, insbesondere ohne mechanischen Rüstaufwand, zur Verarbeitung von verschiedenen Wickelmattentypen mit unterschiedlichen Abmessungen verwendet werden kann, insbesondere unabhängig von der Wickelmattenteilung, von der Wickelmattenbreite, und/oder den Drahtabmessungen der Wickelmatte.

Zur Lösung der Aufgabe ist eine Vorrichtung zum Einbringen einer Wickelmatte in ein rotierbares Übertragungswerkzeug vorgesehen. Die Vorrichtung umfasst ein erstes bandförmiges Transportmittel zum Heranführen der Wickelmatte an das Übertragungswerkzeug. Vorzugsweise ist das erste bandförmige Transportmittel zum tangentialen Heranführen der Wickelmatte an das Übertragungswerkzeug ausgestaltet. Das erste bandförmige Transportmittel weist eine ebene Transportseite zum Kontaktieren der Wickelmatte auf. Mit dem bandförmigen Transportmittel kann die Wickelmatte gefördert werden.

Ferner umfasst die Vorrichtung eine Umlenkeinrichtung, die dazu ausgelegt ist, die Wickelmatte in einem vorbestimmten Umfangsabschnitt in einem Kontakteingriff mit dem Übertragungswerkzeug zu halten. Insbesondere beträgt der Umfangsabschnitt wenigstens 15°, vorzugsweise wenigstens 30°, bevorzugt wenigstens 45°, besonders bevorzugt wenigstens 90°. Die Umlenkeinrichtung ist insbesondere dazu ausgelegt und eingerichtet, um die Wickelmatte von dem bandförmigen Transportmittel in das Übertragungswerkzeug zu überführen. Die Umlenkeinrichtung kann dazu ausgelegt und eingerichtet sein, die Wickelmatte von dem ersten bandförmigen Transportwerkzeug anzuheben und/oder zum Wickelzentrum des Übertragungswerkzeugs zu führen. Vorzugweise ist die Umlenkeinrichtung ist dazu ausgelegt und eingerichtet, der Wickelmatte eine auf ein Wickelzentrum des Übertragungswerkzeug gerichteten Zentripetalbewegung aufzuprägen. Die Umlenkeinrichtung kann zumindest teilweise rampenförmig sein. Vorzugsweise kann die Umlenkeinrichtung sich rampenförmig von einer vom ersten bandförmigen Transportmittel aufgespannten Transportebene in Richtung auf das Wickelzentrum des Übertragungswerkzeugs erheben.

Außerdem umfasst die Vorrichtung wenigstens eine Einpresseinrichtung, die dazu ausgelegt ist, die Wickelmatte in das Übertragungswerkzeug hinein zu drängen. Es kann bevorzugt sein, dass die Einpresseinrichtung in der Drehrichtung und/oder der Förderrichtung unmittelbar angrenzend an Umlenkeinrichtung angeordnet ist. Die Umlenkeinrichtung kann mit wenigstens einer Einpresseinrichtung in Funktionsunion gebildet sein. Vorzugsweise umfasst die Vorrichtung wenigstens eine Einpresseinrichtung, die zum kontinuierlichen Hineindrängen der Wickelmatte in das rotierbare Übertragungswerkzeug während einer Rotationsbewegung des Übertragungswerkzeugs ausgelegt und eingerichtet ist. Alternativ oder zusätzlich kann die Vorrichtung wenigstens eine Einpresseinrichtung aufweisen, die zum diskontinuierlichen Hineindrängen der Wickelmatte in das rotierbare Übertragungswerkzeug ausgelegt und eingerichtet ist, insbesondere während das Übertragungswerkzeug insbesondere rotationsfrei in einer vorzugsweise vorbestimmten Drehstellung festgelegt ist. Die Vorrichtung kann mehrere Einpresseinrichtungen umfassen.

Mithilfe der Vorrichtung ist es möglich, eine Wickelmatte einem rotierenden Übertagungswerkzeug teilungsunabhängig, sowie unabhängig von den Drahtabmessungen und der Wickelmattenbreite kontinuierlich zuzuführen.

Mit "Wickelmatte" kann teppichartiges Halbzeug aus wenigstens einem Draht oder mehreren Drähten bezeichnet sein, aus dem eine Spulenwicklung für einen Stator oder Rotor einer elektrischen Maschine, wie ein Elektromotor oder Generator gebildet werden kann. Vorzugsweise umfasst eine Wickelmatte eine vorbestimmte Anzahl von Drähten. Der wenigstens eine Draht oder die mehreren Drähte der Wickelmatte können vorbestimmte insbesondere konstante Drahtabmessungen aufweisen. Die Wickelmatte kann eine Längserstreckung aufweisen, in der der Draht oder die Drähte mehrere vorzugsweise parallele Wicklungsstränge aufweist. Die Wickelmatte weist eine vorbestimmte Teilung auf (Stegabstand benachbarter Wicklungsstränge). Vorzugsweise hat die Wickelmatte eine konstante Teilung. Eine Wickelmatte kann, insbesondere abschnittsweise konstante, unterschiedlich große Teilungen aufweisen. Unterschiedliche Teilungen einer Wickelmatte können zweckmäßig sein, um Rotoren oder Statoren herzustellen, deren Wickelkopfhöhe in Abhängigkeit der Drahtlage (radial weit außen oder radial weit innen) gleichbleibend ist. In Verbindung von gewollten Teilungsunterschieden innerhalb eine Wickelmatte ist es nach dem Stand der Technik nicht ohne weiteres möglich, diese teilungskonform zu transportieren. Für Wickelmatten mit variierender Teilung kann die Teilung eines konventionellen Systems entsprechend einer mittleren Teilung der Wickelmatte eingestellt werden. Bei einer derart gemittelten Teilung sind allerdings nicht alle Aufnahmen des linearen Transportmittels und des Innenwerkzeugs des konventionellen Systems optimal auf die Wicklungsstränge der Wickelmatte abgestimmt. Das hat den Nachteil, dass beim Übertragen der Wickelmatte große Kräfte entstehen, die zu Drahtbeschädigungen führen können oder es wird bei dem Fügeprozess die Isolierung (Isolierpapier) beschädigt oder geknickt, was letztendlich zu einem Ausschussteil führen kann.

Die Wickelmatte kann eine Wickelmattenbreite aufweisen, die sich quer zur Längserstreckung der Wickelmatte erstreckt. Vorzugsweise ist die Breite einer Wickelmatte konstant. Optional die Breite der Wickelmatte, insbesondere mit Abschnitten konstanter Breite, verändert werden, um den Effekt ungleich hoher Wickelköpfe zu reduzieren. Die Wickelmatte kann hierzu auf einem abgesetzten, gestuften oder konischen Wickelschwert hergestellt werden. Manche bekannte Herstellungssysteme haben seitliche Führungsplanken, um die Wickelmatten auf dem linearen Transportmittel gerade ausgerichtet zu halten. Solche Leitplanken müssen passend zu der Breite der Wickelmatte eingerichtet werden, womit weiterer Rüstaufwand einhergeht, oder können ihre Funktion nur eingeschränkt erfüllen. Bei der Vorrichtung gemäß der vorliegenden Offenbarung kann durch die flächige Auflage der Wickelmatte auf der ebenen Transportseite des ersten bandförmigen Transportmittels ein unbeabsichtigtes Verrutschen der Wickelmatte, unabhängig von der lokalen Breite der Wickelmatte, auch ohne Leitplanke verhindert werden.

Das Übertragungswerkzeug kann zum Aufnehmen von Wicklungssträngen der Wickelmatte sternförmig sein. Vorzugsweise umfasst das Übertragungswerkzeug eine Vielzahl von Radialnuten zum Aufnehmen von Wicklungssträngen der Wickelmatte. Die Teilung der Radialnuten des Übertragungswerkzeugs kann konstant und/oder auf eine vorbestimmte variierende Teilung abgestimmt. Die radialnuten können auf einen Drahtquerschnitt, insbesondere eine Drahtbreite, vorzugsweise einen Drahtdurchmesser, der Wickelmatte abgestimmt sein. Zusätzlich oder alternativ kann das Übertragungswerkzeug wenigstens eine Ringnut oder wenigstens zwei Ringnuten für das bandförmige Transportmittel aufweisen. Das bandförmige Transportmittel kann sich beispielsweise aus mehreren Einzelriemen zusammensetzen, die in die Ringnuten hineinfahren können, oder durch einen in Längsrichtung genuteten Riemen realisiert sein, der von der Transportseite zurückgesetzte Längsnuten aufweist, wobei die Transportseite in das Übertragungswerkzeug eintauchen kann während der Nutgrund der Längsnuten stets außerhalb des Übertragungswerkzeugs verbleibt. Es ist denkbar, dass das Übertragungswerkzeug genau eine, genau zwei, wenigstens drei oder mehr Ringnuten für das bandförmige Transportmittel aufweist. Das rotierbare Übertragungswerkzeug kann haspelförmig sein. Das rotierbare Übertragungswerkzeug kann in die Vorrichtung einsetzbar oder eingesetzt sein. Vorzugsweise ist das Übertragungswerkzeug aus der Vorrichtung entnehmbar. Optional kann das Übertragungswerkzeug ein Rotor oder ein Stator für eine elektrische Maschine, insbesondere einen Generator oder Elektromotor, sein. Bei der Vorrichtung gemäß der vorliegenden Offenbarung kann durch die flächige Auflage der Wickelmatte auf der ebenen Transportseite des ersten bandförmigen Transportmittels auf teilungsspezifische Aufnahmen verzichtet werden. Beim Wechsel zwischen unterschiedlich dimensionierten Wickelmatten braucht also kein Umrüstvorgang durchgeführt werden, und Wickelmatten mit variabler Teilung können ohne Verspannungen transportiert werden.

Optional kann die Vorrichtung eine Drehlagerung, beispielsweise eine Wellenlagerung, zum drehbaren Lagern des Übertragungswerkzeug um die Wickelachse umfassen. Die Drehlagerung kann dazu ausgelegt und eingerichtet sein, das Wickelzentrum festzulegen. um das Insbesondere kann die Vorrichtung mit einer Drehlagerung zum rotierbaren Lagern des Übertragungswerkzeugs in einer vorbestimmten Stellung relativ zu dem ersten bandförmigen Transportmittel, der Umlenkeinrichtung und/oder der Einpresseinrichtung ausgelegt und eingerichtet sein. Insbesondere kann die Drehlagerung einstellbar sein, insbesondere abhängig von einem Nennradius des Übertragungswerkzeugs. Vorzugsweise kann ein Achsabstand der Drehlagerung, insbesondere der Wickelachse, in Bezug auf das erste bandförmige Transportmittel, die Umlenkeinrichtung und/oder die Einpresseinrichtung in wenigstens einer Richtung, beispielsweise quer zu einer durch das bandförmige Transportmittel definierten Transportebene und/oder parallel zu der Förderrichtung, einstellbar sein.

Das erste bandförmige Transportmittel kann insbesondere riemenartig oder kettenartig ausgestaltet sein. Das erste bandförmige Transportmittel kann ein- oder mehrstrangig ausgeführt sein, beispielsweise zweistrangig, dreistrangig, vierstrangig, fünfstrangig oder sechsstrangig. Die mehreren Stränge eines mehrstrangige bandförmigen Transportmittels sind vorzugsweise parallel oder zumindest im Wesentlichen parallel ausgerichtet, sodass Transportseiten der mehreren Stränge eine einheitliche Transportebene definieren, auf der die Wickelmatte an das Übertragungswerkzeug herangeführt wird. Das erste insbesondere mehrstrangige bandförmige Transportmittel kann auf die wenigstens eine Ringnut oder die mehreren Ringnuten des Übertragungswerkzeugs abgestimmt oder abstimmbar sein. Vorzugsweise ist das erste bandförmige Transportmittel in die wenigstens eine Ringnut des Übertragungwerkzeugs eintauchbar. Eine Bandbreite des ersten Transportmittels kann auf die Nutbreite der wenigstens Ringnut abgestimmt sein. Zusätzlich oder alternativ kann ein mehrstrangiges bandförmiges Transportmittel eine in der Axialrichtung auf die Abstände mehrerer Ringnuten des Übertragungswerkzeugs abgestimmte oder abstimmbare, insbesondere einstellbare Strangabstände aufweisen. Vorzugsweise sind mehrere Stränge eines bandförmigen Transportmittels komplementär zu Ringnuten des Übertragungswerkzeugs anordenbar, angeordnet und/oder geformt.

Vorzugsweise umfasst das erste bandförmige Transportmittel einen Friktionsriemen. Das erste bandförmige Transportmittel kann an der Transportseite eine vorbestimmte Shore-Härte aufweisen. Insbesondere hat die Transportseite eine Härte von Shore D 30 bis Shore D 60, vorzugsweise eine Härte eine Härte von Shore D 40 bis Shore D 50, besonders bevorzugt eine Härte von Shore D 40. Alternativ oder zusätzlich hat die Transportseite eine Härte von Shore A 80 bis Shore A 100, vorzugsweise eine Härte eine Härte von Shore A 85 bis Shore A 95, besonders bevorzugt eine Härte von Shore A 90. Vorzugsweise ist die Shore-Härte derart auf den Draht abgestimmt, dass durch die Elastizität der Bandbeschichtung ein teilweiser Formschluss mit dem Draht bereitgestellt wird. Zusätzlich oder alternativ kann eine. insbesondere makroskopisch, strukturierte Oberfläche der Transportseite, insbesondere der Bandbeschichtung, den Formschluss begünstigen. Die strukturierte Oberfläche kann Querrillen, Längsrillen, Rauten und/oder Noppen oder ähnlichen Strukturen aufweisen oder daraus bestehen. Es sei klar, dass eine insbesondere makroskopisch strukturierte Oberfläche kein Trennelement zwischen benachbarten Drähten darstellt. Die Strukturhöhe ist insbesondere kleiner als der Drahtquerschnitt, insbesondere der Drahtdurchmesser, vorzugsweise kleiner als die Hälfte, besonders bevorzugt kleiner als ein Viertel oder als ein Zehntel davon. Das erste bandförmige Transportmittel kann vorzugsweise auf der Transportseite glatt oder zumindest im Wesentlichen glatt gestaltet sein. Besonders bevorzugt ist das erste bandförmige Transportmittel auf der Transportseite zahnfrei, d.h. das bandförmige Transportmittel kann frei von Zähnen oder Zahnlücken zum Aufnehmen der Wicklungsstränge der Wickelmatte sein. Die Vorrichtung kann, wie nachfolgend im Detail beschrieben, mehr als ein bandförmiges Transportmittel umfassen, insbesondere wenigstens ein zweites bandförmiges Transportmittel und/oder wenigstens ein drittes bandförmiges Transportmittel. Es sei klar, dass die vorliegende Offenbarung gleichermaßen auf die verschiedenen Transportmittel anwendbar ist, die sich im Wesentlichen in ihrer Funktion und räumlichen Anordnung unterschieden können. Ferner sei klar, dass verschiedene bandförmige Transportmittel einer Vorrichtung gleichartig oder unterschiedlich sein können.

Bei manchen Ausführungen einer Vorrichtung zum Einbringen einer Wickelmatte in ein rotierbares Übertragungswerkzeug umfasst die Umlenkeinrichtung ein bandförmiges Transportmittel. Die Umlenkeinrichtung kann das erste bandförmige Transportmittel umfassen. Bei einer Vorrichtung, deren erstes bandförmiges Transportmittel auch die Umlenkeinrichtung realisiert, kann vorgesehen sein, dass das Transportmittel die Wickelmatte in einem ersten Transportabschnitt an das Übertragungswerkzeug heranführt, und die Umlenkeinrichtung in einem zweiten Abschnitt gebildet ist. Alternativ oder zusätzlich kann die Umlenkeinrichtung ein zweites bandförmiges Transportmittel umfassen. Das erste bandförmige Transportmittel und das zweite bandförmige Transportmittel sind vorzugsweise unterschiedliche Transportmittel. Es ist denkbar, dass das erste bandförmige Transportmittel und das zweite bandförmige Transportmittel einen gemeinsamen Übergabeabschnitt und/oder eine gemeinsame Übergabewelle umfassen. Das erste bandförmige Transportmittel und das zweite bandförmige Transportmittel können jeweils eigene Antriebswellen oder eine gemeinsame Antriebswelle aufweisen.

Gemäß mancher Ausführungen einer Vorrichtung zum Einbringen einer Wickelmatte umschlingt die Umlenkeinrichtung, insbesondere das bandförmige Transportmittel, vorzugsweise das erste bandförmige Transportmittel und/oder das zweite bandförmiges Transportmittel, in einer Wickelstellung das Übertragungswerkzeug teilweise. Vorzugsweise ist die Umlenkeinrichtung, insbesondere das vorzugsweise zweite bandförmige Transportmittel, aus der Wickelstellung in eine Freigabestellung zum Einsetzen und/oder Entnehmen des Übertragungswerkzeugs verlagerbar. Zweckmäßigerweise kann die Umlenkeinrichtung, insbesondere das bandförmige Transportmittel, zwischen der Wickelstellung und der Freigabestellung verschwenkbar sein. Insbesondere sind das erste und/oder das zweite bandförmigen Transportmittel um eine gemeinsame Übergabewelle relativ zueinander schwenkbar. Vorzugsweise ist die Schwenkachse, um die die Umlenkeinrichtung, insbesondere das Transportmittel, schwenkbar ist, unterhalb des Übertragungswerkzeugs oder des Wickelzentrums angeordnet.

In manchen bevorzugten Ausführungen umfasst eine Vorrichtung zum Einbringen einer Wickelmatte ferner eine Führungseinrichtung, die wenigstens eine gegenüber dem ersten bandförmigen Transportmittel angeordnete, vorzugsweise zu der Transportseite parallele, Niederhaltefläche aufweist. Die Niederhaltefläche erstreckt sich vorzugsweise in der Förderrichtung zu einer tangentialen Übergabestelle, wo das erste bandförmige Transportmittel im Wesentlichen tangential auf das Übertragungswerkzeug trifft. Die Wickelmatte ist im Wesentlichen flach und eben und wird mit ihrer flachen und ebenen Erstreckung tangential an das Übertragungswerkzeug herangeführt. Die Wickelmatte hat eine Längserstreckung und eine Breitenerstreckung quer zur Längserstreckung, wobei die Wickelmatte einen teppichartigen Körper bildet. Die Längserstreckung ist größer als die Breitenerstreckung, beispielsweise 3 bis 30 mal so groß. Die Wickelmatte hat auch eine Höhe, die durch die Höhe der Wicklungsstränge definiert sein kann. Die Höhe der Wickelmatte ist wesentlich geringer als die Breitenerstreckung und die Längserstreckung der Wickelmatte. Bei manchen Ausführungen kann die Längserstreckung beispielsweise 100 bis 1000 mal so groß sein wie die Höhe, oder noch größer. Bevorzugt erstreckt sich die Niederhaltefläche bis unmittelbar zu der Übergabestelle. Vorzugsweise ist die Umlenkeinrichtung in der Förderrichtung hinter der Führungseinrichtung angeordnet. Die Führungseinrichtung kann wenigstens einen Führungskeil umfassen.

Zusätzlich oder alternativ kann die Führungseinrichtung wenigstens ein drittes bandförmiges Transportmittel aufweisen. Das dritte bandförmige Transportmittel kann eine dritte Transportseite aufweisen, die gegenüber dem ersten bandförmigen Transportmittel angeordnet und/oder zu der Transportseite parallel ist. Insbesondere ist die dritte Transportseite als ebene Transportseite und/oder zum Kontaktieren der Wickelmatte ausgelegt und eingerichtet ist. Zwischen einerseits der Transportseite und andererseits der Niederhaltefläche und/oder der dritten Transportseite kann ein Spalt insbesondere mit konstanter Spalthöhe gebildet sein. Die Spalthöhe kann abgestimmt auf eine Drahthöhe, insbesondere korrespondierend zu einer Drahthöhe der Wickelmatte, ausgelegt und eingerichtet sein. Vorzugsweise ist bei einer Führungseinrichtung mit dem Führungskeil und der dritten bandförmigen Transportvorrichtung der Führungskeil in der Transportrichtung zwischen dem dritten bandförmigen Transportmittel und der Übergabestelle angeordnet.

Bei einer Weiterbildung der Vorrichtung weist die Führungseinrichtung eine an den Außenumfang des Übertragungswerkzeugs angepasste Gleitfläche auf. Die Gleitfläche kann beispielsweise gemäß einer Spielpassung auf das Übertragungswerkzeug angepasst sein. Es kann bevorzugt sein, dass sich die Gleitfläche von der Übergabestelle, insbesondere unmittelbar an der Übergabestelle beginnend, um das Wickelzentrum herum erstreckt. Die Gleitfläche und die Niederhaltefläche können an demselben keilförmigen Führungskörper der Führungseinrichtung gebildet sein. Insbesondere kann die Führungseinrichtung das Übertragungswerkezug gemeinsam mit Umlenkeinrichtung sowie gegebenenfalls der Einpresseinrichtung teilumfänglich umgeben. Insbesondere ist das Übertragungswerkzeug in einer Wickelstellung wie oben beschrieben gemeinsam von der Führungseinrichtung und der Umlenkeinrichtung sowie gegebenenfalls der Einpresseinrichtung teilumfänglich umgeben sein. Insbesondere spannen die Gleitfläche, bevorzugt in der Wickelstellung, zusammen mit der Umlenkeinrichtung und gegebenenfalls der Einpresseinrichtung einen Umfangswinkel von wenigstens 90°, insbesondere wenigstens 135°, vorzugsweise wenigstens 180°, auf. Der Umfangswinkel kann begrenzt sein auf nicht mehr als 270°, insbesondere nicht mehr als 235°, vorzugsweise nicht mehr als 210° oder nicht mehr als 200°.

Bei manchen bevorzugten Ausführungen der Vorrichtung zum Einbringen einer Wickelmatte ist die wenigstens eine Einpresseinrichtung dazu ausgelegt, der Wickelmatte eine auf ein Wickelzentrum des Übertragungswerkzeug gerichteten Zentripetalbewegung aufzuprägen. Mit einer solchen Vorrichtung kann eine Wickelmatte kontinuierlich in ein Übertragungswerkzeug eingebracht werden und so besonders kurze Herstellungszyklen erreicht werden. Vorzugsweise umfasst die wenigstens eine Einpresseinrichtung ein zweites bandförmiges Transportmittel. Die Einpresseinrichtung kann wenigstens ein Stützrad, insbesondere mehrere Stützräder, aufweisen, an dem bzw. an denen sich das zweite bandförmige Transportmittel abstützt. Dabei können die Stützräder der Einpresseinrichtung in die Ringnuten des Übertragungswerkzeugs eingreifen, um besonders hohen Einbringkräfte aufnehmen zu können. Insbesondere kann die Einpresseinrichtung mehrere in der Drehrichtung hintereinander angeordnete Stützräder umfassen. Vorzugsweise sind in der Drehrichtung hintereinander angeordnete Stützräder sukzessive näher an dem Wickelzentrum angeordnet. Beispielsweise kann ein vorderes Stützrad nur an der Oberfläche arbeiten und ein hinteres Stützrad tief in das Übertragungswerkzeug eintauchen.

Vorzugsweise umfasst das zweite bandförmige Transportmittel der Einpresseinrichtung und/oder der Umlenkeinrichtung einen Friktionsriemen. Das zweite bandförmige Transportmittel kann an der Transportseite eine vorbestimmte Shore-Härte aufweisen. Insbesondere hat die Transportseite eine Härte von Shore D 30 bis Shore D 60, vorzugsweise eine Härte eine Härte von Shore D 40 bis Shore D 50, besonders bevorzugt eine Härte von Shore D 40. Alternativ oder zusätzlich hat die Transportseite eine Härte von Shore A 80 bis Shore A 100, vorzugsweise eine Härte eine Härte von Shore A 85 bis Shore A 95, besonders bevorzugt eine Härte von Shore A 90. Das zweite bandförmige Transportmittel kann vorzugsweise auf der Transportseite glatt oder zumindest im Wesentlichen glatt gestaltet sein. Besonders bevorzugt ist das zweite bandförmige Transportmittel auf der Transportseite zahnfrei, d.h. das bandförmige Transportmittel kann frei von Zähnen oder Zahnlücken zum Aufnehmen der Wicklungsstränge der Wickelmatte sein.

Zusätzlich oder alternativ kann bei manchen bevorzugten Ausführungen der Vorrichtung die wenigstens eine Einpresseinrichtung einen bezüglich des Wickelzentrums radialbeweglichen Stempel umfassen. Es kann bevorzugt sein, dass die Einpresseinrichtung ein bandförmiges Transportmittel und einen Stempel umfasst. Beispielsweise kann eine Vorrichtung für besonders große Drahtquerschnitte mit einem zusätzlichen Stempel ausgestattet sein, um ein stabiles Einbringen der Wickelmatte in das Übertragungswerkzeug sicherzustellen. Alternativ kann bevorzugt sein, dass die Einpresseinrichtung einen Stempel aufweist und insbesondere frei von einem bandförmigen Transportmittel ist. Vorzugsweise ist der Stempel bezüglich des Wickelzentrums vor- und zurück beweglich gelagert. Der Stempel kann insbesondere linearbeweglich gelagert sein. Zusätzlich oder alternativ kann ein Stempel schwenkbeweglich sein. Insbesondere kann der Stempel zwischen einer Freigabestellung zum Entnehmen des Übertragungswerkzeug und einer aktiven Stellung beweglich sein, insbesondere schwenkbeweglich. Weiter bevorzugt kann der Stempel in der aktiven Stellung zwischen einer zurückgezogenen Stellung, in der das Übertragungswerkzeug ohne Beeinträchtigung durch den Stempel um das Wickelzentrum drehbar ist, und einer hervorstehenden Stellung zum Hineindrücken der Wickelmatte in das Übertragungswerkzeug, insbesondere linear, verlagerbar sein.

Die vorliegende Offenbarung betrifft auch ein Verfahren zum Einbringen einer Wickelmatte in ein Übertragungswerkzeug. Das Verfahren zum Einbringen der Wickelmatte das Übertragungswerkzeug kann insbesondere mit einer Vorrichtung nach einem der vorstehenden Ansprüche durchgeführt werden. Bei dem Verfahren wird die Wickelmatte zunächst in einer Förderrichtung, vorzugsweise linear, an das Übertragungswerkzeug herangeführt wird, wobei die Wickelmatte mit einer ebenen Transportseite eines ersten bandförmigen Transportmittels in Eingriff steht. Sodann wird die Wickelmatte in einem Kontakteingriff mit dem Übertragungswerkzeug gehalten, wobei das Übertragungswerkzeug in einer Drehrichtung um ein Wickelzentrum rotiert. Während der Rotationsbewegung oder nach Abschluss der Rotationsbewegung des Übertragungswerkzeugs wird die Wickelmatte in das Übertragungswerkzeug hineingedrängt.

Bei einer bevorzugten Ausführung des Verfahrens rotiert das Übertragungswerkzeug kontinuierlich rotiert und die Wickelmatte wird während der Rotationsbewegung des Übertragungswerkzeugs in das Übertragungswerkzeug hinein gedrängt wird.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine erste Ausführung einer Vorrichtung zum Einbringen einer Wickelmatte in ein rotierbares Übertragungswerkzeug;
- Fig. 2: eine schematische Draufsicht auf eine Wickelmatte und die Vorrichtung gemäß Fig. 1
- Figs. 3A-3H: verschiedene Zustände einer zweiten Ausführung einer Vorrichtung zum Einbringen einer Wickelmatte in ein rotierbares Übertragungswerkzeug;
- Figs. 4A-4H: verschiedene Zustände einer dritten Ausführung einer Vorrichtung zum Einbringen einer Wickelmatte in ein rotierbares Übertragungswerkzeug;
- Figs. 5A-5H: verschiedene Zustände einer vierten Ausführung einer Vorrichtung zum Einbringen einer Wickelmatte in ein rotierbares Übertragungswerkzeug;
- Figs. 6A-6H: verschiedene Zustände einer fünften Ausführung einer Vorrichtung zum Einbringen einer Wickelmatte in ein rotierbares Übertragungswerkzeug;
- Figs. 7A-7H: verschiedene Zustände einer sechsten Ausführung einer Vorrichtung zum Einbringen einer Wickelmatte in ein rotierbares Übertragungswerkzeug; und
- Figs. 8A-8G: verschiedene Zustände der Ausführung der Vorrichtung zum Einbringen einer Wickelmatte in ein rotierbares Übertragungswerkzeug gemäß Fig. 1;
- Figs. 9A-9H: verschiedene Zustände einer siebten Ausführung einer Vorrichtung zum Einbringen einer Wickelmatte in ein rotierbares Übertragungswerkzeug.

In der nachfolgenden Beschreibung bevorzugter Ausführungen werden für dieselben und ähnliche Komponenten dieselben oder ähnliche Bezugszeichen verwendet. Für die gleichen und ähnliche Zustände der verschiedenen Ausführungen werden die gleichen oder ähnliche Abbildungsnummern verwendet.

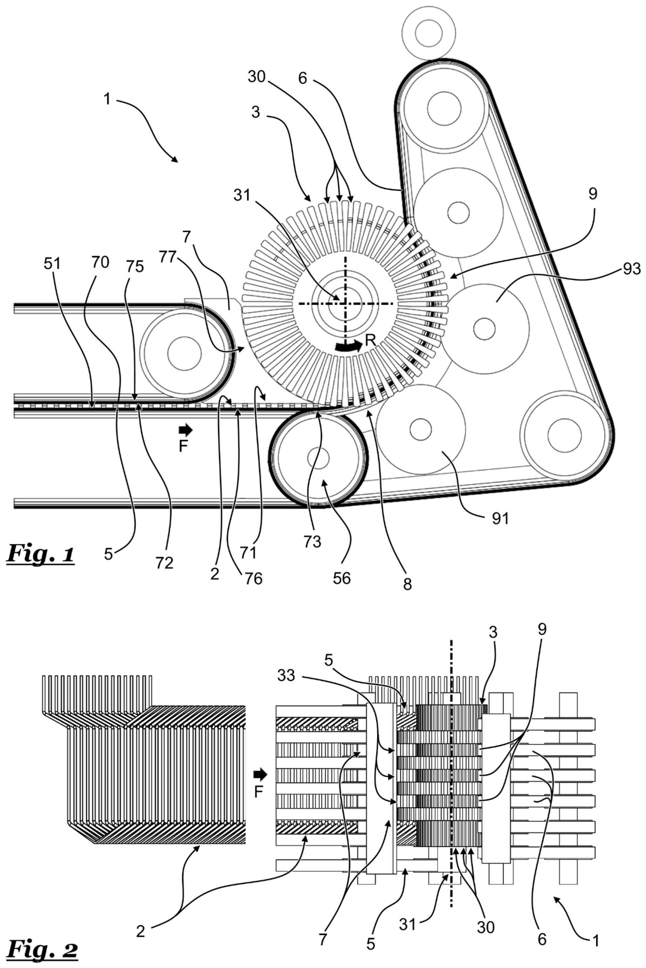

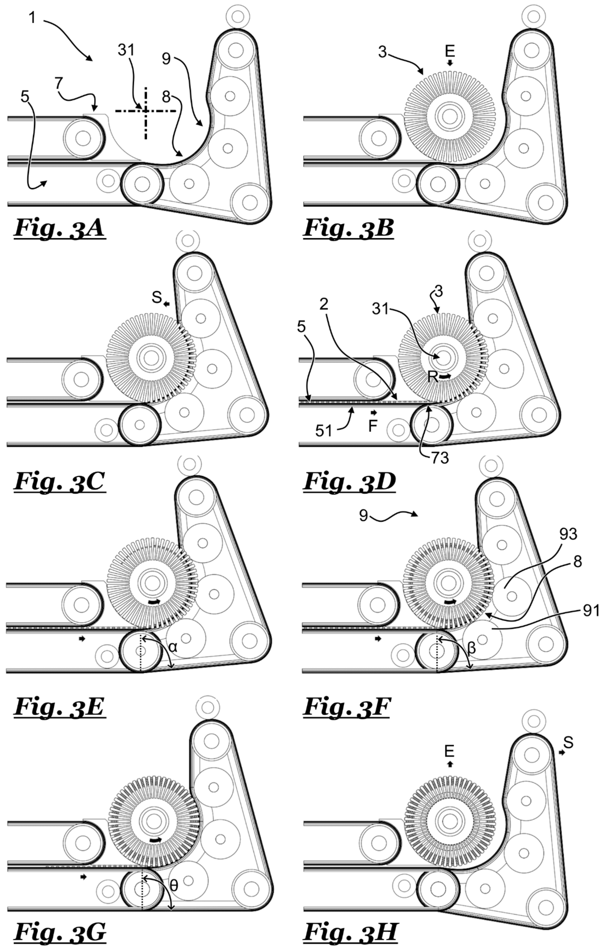

Figur 1 zeigt eine erste Ausführung einer Vorrichtung 1 zum Einbringen einer Wickelmatte in ein rotierbares Übertragungswerkzeug. Figur 2 zeigt eine schematische Draufsicht auf eine Wickelmatte 2 und die Vorrichtung 1 gemäß Figur 1. Die Figuren 3A bis 3H zeigen verschiedene Zustände der Ausführung der Vorrichtung 1.

Die Vorrichtung 1 umfasst ein erstes bandförmiges Transportmittel 5, mit dem die Wickelmatte 2 linear in einer Förderrichtung F tangential an das Übertragungswerkzeug 3 herangeführt wird. Das erste bandförmige Transportmittel 5 hat eine ebene Transportseite 51, auf dem die Wickelmatte 2 aufliegen kann. Die Vorrichtung 1 umfasst auch eine Umlenkeinrichtung 8, mit der die Wickelmatte 2 in einem vorbestimmten Umfangsabschnitt in ein einem Kontakteingriff mit dem Übertragungswerkzeug 3 gehalten wird. Außerdem umfasst die Vorrichtung eine Einpresseinrichtung 9, die dazu ausgelegt ist, die Wickelmatte 2 in das Übertragungswerkzeug 3 hinein zu drängen. Die die Umlenkeinrichtung 8 und die Einpresseinrichtung 9 umfassen ein zweites bandförmiges Transportmittel 6.

In Figur 3A wird die Vorrichtung 1 zum Einbringen einer Wickelmatte in ein rotierbares Übertragungswerkzeug ohne das Übertragungswerkzeug und ohne eine Wickelmatte gezeigt. Andeutungsweise zeigt Figur 3A das Wickelzentrum 31, das durch eine (nicht näher dargestellte) Drehlagerung der Vorrichtung 1 festgelegt sein kann, in die ein Übertragungswerkzeug lösbar eingesetzt werden kann.

Die Vorrichtung 1 mit einem eingesetzten Übertragungswerkzeug 3 zeigt Figur 3B. In den Figuren 3A, 3B und 3H befindet sich die Vorrichtung in einer Freigabestellung, in der Übertragungswerkzeuge 3 frei einsetzbar oder entnehmbar sind, wie durch die Pfeile E in den Figuren 3B und 3H symbolisiert wird.

In den Figuren 1, 2 und 3C bis 3G befindet sich die Vorrichtung in einer Wickelstellung, in der die Wickelmatte 2 in das Übertragungswerkzeug 3 eingebracht werden kann. In dieser Stellung wird die Wickelmatte 2 mit dem ersten bandförmigen Transportmittel 5 tangential an das haspelförmige Übertragungswerkzeug herangeführt. Dabei erstreckt sich die Wickelmatte 2, wie in den Figur 2 dargestellt, mit ihrer Längserstreckungsrichtung in der Förder- oder Transportrichtung F, und mit ihrer Breitenerstreckungsrichtung senkrecht dazu. Die Wickelmatte 2 liegt auf der ebenen Transportfläche 51 des ersten bandförmigen Transportmittel 2 flächig auf.

Um einen zusätzlichen Schutz gegen ein Verrutschen der Wickelmatte 2 zu bieten, kann die Vorrichtung 1 ferner mit einem dritten bandförmigen Transportmittel 70 ausgestattet sein. Das dritte Transportmittel 70 kann eine (dritte) ebene Transportfläche 72 aufweisen, die flächig auf der Wickelmatte 2 aufliegen kann. Das erste und das dritte bandförmige Transportmittel 5, 70 kooperieren beim Heranführen der Wickelmatte 2 an das Übertragungswerkzeug 3. Indem das erste und das dritte bandförmige Transportmittel 5 und 70 in der Transportrichtung F mit derselben Vorschubgeschwindigkeit bewegt werden, wird die Wickelmatte 2 beim Heranführen an das Übertragungswerkzeug 3 sicher in einer vorbestimmten Position gehalten. Das positionstreue Halten der Wickelmatte 2 während des Transports durch das erste bandförmige Transportmittel 5 und gegebenenfalls ein weiteres, drittes Transportmittel kann zusätzlich oder alternativ unterstützt werden, indem die erste Transportfläche 51 und gegebenenfalls die dritte Transportfläche 72 mit einer rutschhemmenden Oberflächenbeschichtung versehen ist oder sind. Das erste und das dritte bandförmige Transportmittel 5 und 70 können beispielsweise durch dieselbe Antriebseinheit mit der gleichen Vorschubgeschwindigkeit betrieben werden. Zwischen dem ersten und dem dritte bandförmige Transportmittel 5 und 70 kann ein Spalt 75 gebildet sein. Der Spalt 75 kann eine vorzugsweise konstante Spalthöhe aufweisen, die an die Höhe der Wickelmatte 2 anpassbar oder angepasst sein kann.

Als zusätzlichen Schutz gegen ein Verkanten der Wickelmatte 2 kann die Vorrichtung 1 mit einer Niederhaltefläche 71 ausgestaltet sein, die gegenüber dem ersten bandförmigen Transportmittel 5 angeordnet ist. Die Niederhaltefläche 71 kann eine flächige Barriere gegen Ausweichbewegungen der Wicklungsstränge fort von der ersten Transportfläche 51 bilden. Die Niederhaltefläche 71 kann sich in der Förderrichtung F bis zu einer tangentialen Übergabestelle 73 erstrecken, wo das erste bandförmige Transportmittel 5 im Wesentlichen tangential auf das Übertragungswerkzeug 3 trifft. Zwischen der Transportseite 51 des ersten bandförmigen Transportmittels 5 und der Niederhaltefläche 71 kann ein Spalt 76 gebildet sein. Der Spalt 76 kann eine vorzugsweise konstante Spalthöhe aufweisen, die an die Höhe der Wickelmatte 2 anpassbar oder angepasst sein kann.

Wie in Figur 2 dargestellt, kann die Vorrichtung 1 eine Führungseinrichtung 7 mit einer Niederhaltefläche 71 und einem dritten insbesondere bandförmigen Transportmittel 70 aufweisen. Die Spalte 75 und 76 können miteinander fluchten.

Die Vorrichtung 1 kann zwischen einer Wickelstellung und einer Freigabestellung wechseln. Wie in den Figuren 3C und 3H durch die Pfeile S symbolisiert, ist die Einpresseinrichtung 9 mit dem zweiten bandförmigen Transportmittel 6 zwischen schwenkbeweglich zwischen der Freigabestellung und der Wickelstellung.

Die Vorrichtung 1 kann eine Führungseinrichtung 7 umfassen, die eine Gleitfläche 77 aufweist. Die Gleitfläche 77 kann sich von der Übergabestelle 73 entgegen der Drehrichtung R entlang dem Außenumfang des Übertragungswerkzeugs erstecken. Insbesondere kann die Gleitfläche 77 unmittelbar an der Übergabestelle 73 beginnen. Die Gleitfläche 77 kann komplementär zu einem Außenumfang des Übertragungswerkzeugs 3 geformt sein. Insbesondere liegt die Gleitfläche 77 am Außenumfang des Übertragungswerkzeugs 3, vorzugsweise gemäß einer Gleit- oder Spielpassung, an. Optional kann der Einpresseinrichtung 9 gegenüberliegend eine Führungseinrichtung 7 angeordnet sein, um für das Übertragungswerkzeug 3 als Widerlager für die Einpresskräfte zu dienen.

In der Wickelstellung (Figuren 1, 2 und 3C bis 3G) umschlingen das erste und das zweite bandförmige Transportmittel 6, 8 gemeinsam mit der Gleitfläche 77 das Übertragungswerkzeug 3 mit einem Umfangswinkel von mehr als 180°. Wie abgebildet kann der Umfangswinkel kleiner als 235° sein.

Vorzugsweise ist das Übertragungswerkzeug 3 ist passend auf die Wickelmatte 2 formabgestimmt. Die Radialnuten 30 des Übertragungswerkzeugs sind bezüglich ihrer Teilung auf die Teilung der Wickelmatte 2 abgestimmt. Zusätzlich oder alternativ kann die Nutbreite der Radialnuten 30 auf den Drahtquerschnitt der Wickelmatte 2 abgestimmt sein. Ferner kann die axiale Breite des Übertragungswerkzeugs 3 auf die Wickelmattenbreite 2 abgestimmt sein, wie in Figur 2 dargestellt. Um verschiedene Wickelmatten 2 mit unterschiedlichen Wicklungsteilungen, Wickelmattenbreiten oder Drahtdicken zu wickeln braucht, also nur das jeweils passende Übertragungswerkzeug 3 eingesetzt zu werden, ohne dass die Vorrichtung 1 im Übrigen angepasst werden müsste.

Das abgebildete Übertragungswerkzeug 3 hat drei Ringnuten 33, die in der Axialrichtung des Übertragungswerkzeugs 3 begrenzt sind durch vollumfängliche, radial hervorstehende Ringkragen, in denen die Radialnuten 30 zum Aufnehmen der Wicklungsstränge gebildet sind. Für eine breitere Wickelmatte kann dementsprechend ein breiteres Übertragungswerkzeug mit beispielsweise vier oder fünf Ringnuten eingesetzt werden, oder für eine schmalere Wickelmatte ein schmaleres Übertragungswerkzeug mit nur einer oder zwei Ringnuten. Wie in Figur 2 zu erkennen, sind die unteren Riemenstränge nicht durch die abgebildete Wicklungsmatte 2 belegt und stehen für breitere Wicklungsmatten zur Verfügung.

Die Einpresseinrichtung 9 ist dazu ausgelegt, der Wickelmatte 2 eine auf ein Wickelzentrum 31 des Übertragungswerkzeugs 3 gerichteten Zentripetalbewegung aufzuprägen.

Zunächst wird die Wickelmatte 2, wie in Figur 3D dargestellt, linear zur Übergabestelle 73 hin und dort tangential an das um das Wickelzentrum 31 rotierende Übertragungswerkzeug 3 herangeführt. Während der Linearbewegung steht die Wickelmatte 2 mit der ebenen Transportseite 51 des ersten bandförmigen Transportmittels 5 in Eingriff. Die Fördergeschwindigkeit, mit der das erste bandförmige Transportwerkzeug 5 angetrieben wird, ist vorzugsweise auf die Rotationsgeschwindigkeit des Übertragungswerkzeugs 3 abgestimmt. Insbesondere kann die Fördergeschwindigkeit der ersten Transportfläche 51 entsprechend der Umfangsgeschwindigkeit am Außenumfang des Übertragungswerkszeugs 3 eingestellt sein.

Sodann wird die Wickelmatte in einem Kontakteingriff mit dem Übertragungswerkzeug 3 gehalten wird, wobei das Übertragungswerkzeug 3 in einer Drehrichtung R um ein Wickelzentrum 31 rotiert. Dabei nimmt das Übertragungswerkzeug 3 sukzessive die Wicklungsstränge von der Wickelmatte 2 in den Radialnuten 30 auf.

An der Übergabestelle 73 kann die Wickelmatte 2 von der ersten Transportvorrichtung 5 an die Umlenkeinrichtung 8 übergeben werden. Dabei kann der Kontakteingriff zwischen der Wickelmatte 2 von der ersten Transportfläche 51 gelöst werden und die Wickelmatte 2 mit einer zweiten Transportfläche 61 des zweiten bandförmigen Transportmittels 6 übergeben werden. Die Umlenkeinrichtung 6 kann einen Umfangsabschnitt von wenigstens 15°, vorzugsweise wenigstens 30°, bevorzugt wenigstens 45°, besonders bevorzugt wenigstens 90°, einschließen.

Wie in den Figuren 3D bis 3G dargestellt, wird bei der ersten Ausführung der Vorrichtung 1 die Wickelmatte 2 während der Rotationsbewegung R des Übertragungswerkzeugs 3 durch das Einpresswerkzeug 9 in das Übertragungswerkzeug 3 hineingedrängt. Das zweite bandförmige Transportwerkzeug 6 taucht in die Ringnuten 33 des Übertragungswerkzeugs ein und nimmt dabei die Wicklungsstränge der Wickelmatte 2 in radialer Richtung mit. Das zweite bandförmige Transportwerkzeug 6 stützt sich an Stützrädern 91, 93 ab. Das vordere Stützrad 91 taucht nur leicht in das Übertragungswerkzeug 3 ein, das hintere Stützrad 93 tiefer.

Die Abrollgeschwindigkeit, mit der das zweite bandförmige Transportwerkzeug 6 angetrieben wird, ist vorzugsweise auf die Rotationsgeschwindigkeit des Übertragungswerkzeugs 3 abgestimmt. Insbesondere kann die Abrollgeschwindigkeit der zweiten Transportfläche 61 entsprechend der Umfangsgeschwindigkeit in der Ringnut 33 des Übertragungswerkszeugs 3 eingestellt sein. Es kann bevorzugt sein, dass die Abrollgeschwindigkeit niedriger ist als die Fördergeschwindigkeit.

Mit der in den Figuren 1, 2 und 3A bis 3H dargestellten Vorrichtung 1 kann das Übertragungswerkzeug 3 kontinuierlich rotiert werden und die Wickelmatte 2 während dieser kontinuierlichen Rotationsbewegung von dem Übertragungswerkzeug 3 aufgewickelt werden.

Wenn die Wickelmatte 2 in mehreren Lagen in das Übertragungswerkzeug 3 eingebracht wird, kann in der Wickelstellung ein Zustellwinkel des Einpresswerkzeugs 9 lageabhängig eingestellt werden. Beispielsweise kann für das Einbringen einer ersten Lage (Figur 3E) ein erster Zustellwinkel α, für das Einbringen einer zweiten Lage (Figur 3F) ein zweiten Zustellwinkel β, und für das das Einbringen einer dritten Lage (Figur 3G) ein dritter Zustellwinkel θ eingestellt werden. Vorzugsweise ist der dritte Zustellwinkel θ weiter geöffnet als der zweite Zustellwinkel β, welcher weiter geöffnet ist als der erste Zustellwinkel α.

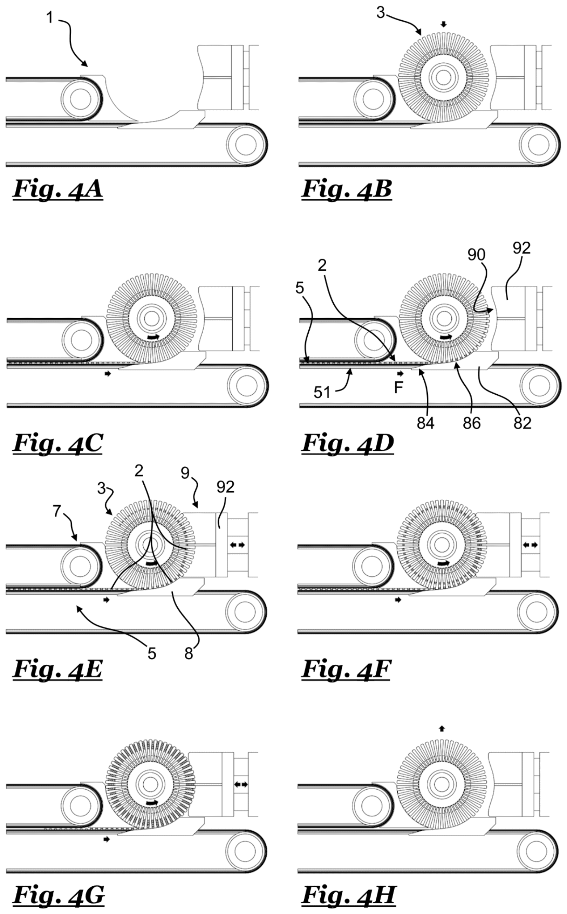

Die Figuren 4A bis 4H zeigen verschiedene Zustände einer zweiten Ausführung einer Vorrichtung zum Einbringen einer Wickelmatte in ein rotierbares Übertragungswerkzeug. Die zweite Ausführung unterscheidet sich von der ersten Ausführung im Wesentlichen durch die Umlenkeinrichtung 8 und die Einpresseinrichtung 9.

Die Umlenkeinrichtung 8 ist bei der in den Figuren 4A bis 4H dargestellten Ausführung gebildet durch eine keilförmige Rampe 82. Die keilförmige Rampe 82 ist ortsfest fixiert. Die keilförmige Rampe 82 umfasst eine Schildfläche 84 und eine Lauffläche 86. Die Schildfläche 84 ist der Lauffläche 86 bezüglich der Transportrichtung F vorgelagert. Die Lauffläche 86 schließt in der Drehrichtung R unmittelbar an die Schildfläche 84 an.

Die Umlenkeinrichtung 8 steht kämmend mit dem bandförmigen Transportmittel 5 in Eingriff. Die Schildfläche 84 ragt bis unter die von der Transportfläche 51 aufgespannte Ebene und ist bezüglich dieser Ebene in einem spitzen Winkel geneigt, sodass die auf die Umlenkeinrichtung 8 auflaufende Wickelmatte 2 von der Schildfläche 84 in Richtung des Wickelzentrums 31 umgelenkt wird. Die Lauffläche 86 befindet sich bezüglich der von der Transportfläche 51 aufgespannte Ebene auf der gleichen Seite wie das Wickelzentrum 31. Die Schildfläche 84 erstreckt sich zumindest teilweise auf der zum Wickelzentrum 31 gegenüberliegende Seite dieser Ebene.

Die Lauffläche 86 kann sich von der Übergabestelle 73 in der Drehrichtung R entlang dem Außenumfang des Übertragungswerkzeugs 3 erstecken. Insbesondere kann die Lauffläche 86 unmittelbar an der Übergabestelle 73 oder in Förderrichtung F bereits vor der Übergabestelle 73 beginnen. Die Lauffläche 86 kann komplementär zu einem Außenumfang des Übertragungswerkzeugs 3 geformt sein. Insbesondere liegt die Lauffläche 86 am Außenumfang des Übertragungswerkzeugs 3, vorzugsweise gemäß einer Gleit- oder Spielpassung, an. Insbesondere beträgt der Umfangsabschnitt, an dem die die Lauffläche 86 am Außenumfang des Übertragungswerkzeugs 3 anliegt, wenigstens 15°, vorzugsweise wenigstens 30°, bevorzugt wenigstens 45°, besonders bevorzugt wenigstens 90°.

Die Wickelmatte 2 kann von dem ersten Transportmittel 5 während einer Rotationsbewegung des Übertragungswerkzeugs 3 entlang der Umlenkeinrichtung 8 gleiten, damit mehrere benachbarte Wicklungsstränge der Wicklungsmatte 2 sukzessive in Eingriff mit Radialnuten 30 des Übertragungswerkzeugs 3 gebracht werden.

In der Drehrichtung R hinter der Umlenkeinrichtung 8 ist die Einpresseinrichtung 9 angeordnet. Die Einpresseinrichtung 9 umfasst in der in den Figuren 4A bis 4H abgebildeten Ausführung einen linearbeweglichen Stempel 92. Der Stempel 92 ist radial bezüglich des Wickelzentrums 31 beweglich, um die Wickelmatte 2 in das Übertragungswerkzeug 3 einzubringen. Die Vorrichtung arbeitet diskontinuierlich, d.h., dass der Stempel 92 erst nach Abschluss der Rotationsbewegung des Übertragungswerkzeugs 3 in das Übertragungswerkzeug 3 hineingedrängt wird. Beispielsweise kann der Stempel 92 in insbesondere regelmäßigen Abständen, beispielsweise nach jeder Drehbewegung des Übertragungswerkzeugs 3 um einen Drehwinkel im Bereich von 10° bis 45°, vorzugsweise im Bereich von 20° bis 30°, zwischen einer aktiven Einpressstellung und einer passiven Stellung verlagert werden. Mit einer hohen Stempel-Taktfrequenz kann ein nahezu kontinuierlicher Prozess erreicht werden.

Der Stempel 92 definiert einen Stempel-Umfangsabschnitt, an dem die eine Anpressfläche 90 des Stempels 92 zum Einbringen der Wickelmatte 2 in das Übertragungswerkzeug 31 einführbar ist. Die Anpressfläche kann komplementär zu einer Ringnut 33 des Übertragungswerkzeugs 3 geformt sein. Insbesondere kann Anpressfläche in die Ringnut 33 des Übertragungswerkzeugs 3 in einem Stempel-Umfangsabschnitt in Eingriff mit der Ringnut 33 gebracht werden. Die Anpressfläche kann eine konkave Krümmung, vorzugsweise komplementär zum Umfang der Ringnut 33, aufweisen. Insbesondere beträgt der Stempel-Umfangsabschnitt im Bereich der Anpressfläche wenigstens 15°, vorzugsweise wenigstens 30°, bevorzugt wenigstens 45°, und/oder nicht mehr als 90°, insbesondere nicht mehr als 75°, vorzugweise nicht mehr als 60°.

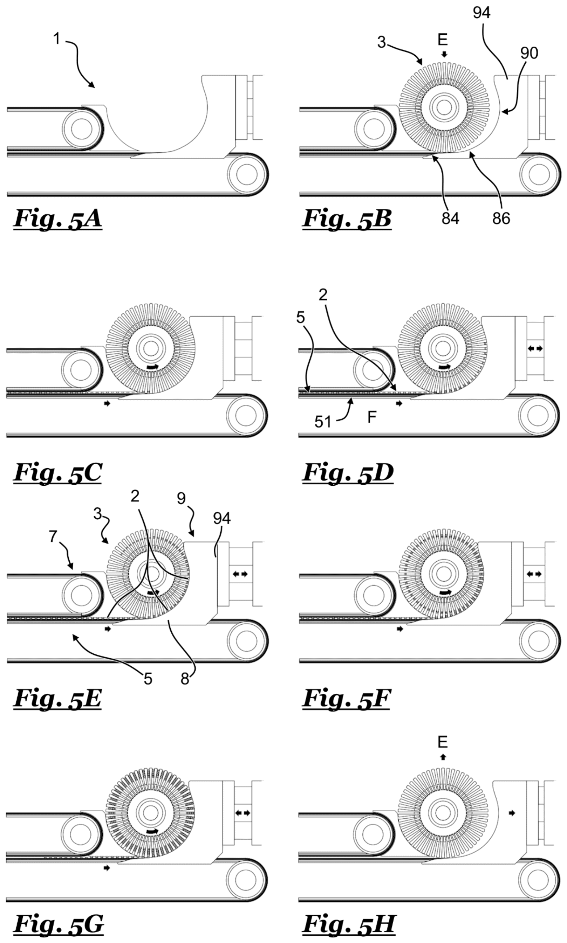

Die Figuren 5A bis 5H zeigen verschiedene Zustände einer dritten Ausführung einer Vorrichtung zum Einbringen einer Wickelmatte in ein rotierbares Übertragungswerkzeug. Von der zweiten Ausführung unterscheidet sich die dritte Ausführung im Wesentlichen nur dadurch, dass die Schildfläche 84 fest mit dem Stempel 94 verbunden ist, und dadurch, dass die Lauffläche 86 unmittelbar an die Anpressfläche 90 angrenzt. Der Stempel 94 bildet also in Funktionsunion sowohl die Einpresseinrichtung 9 als auch die Umlenkeinrichtung 8.

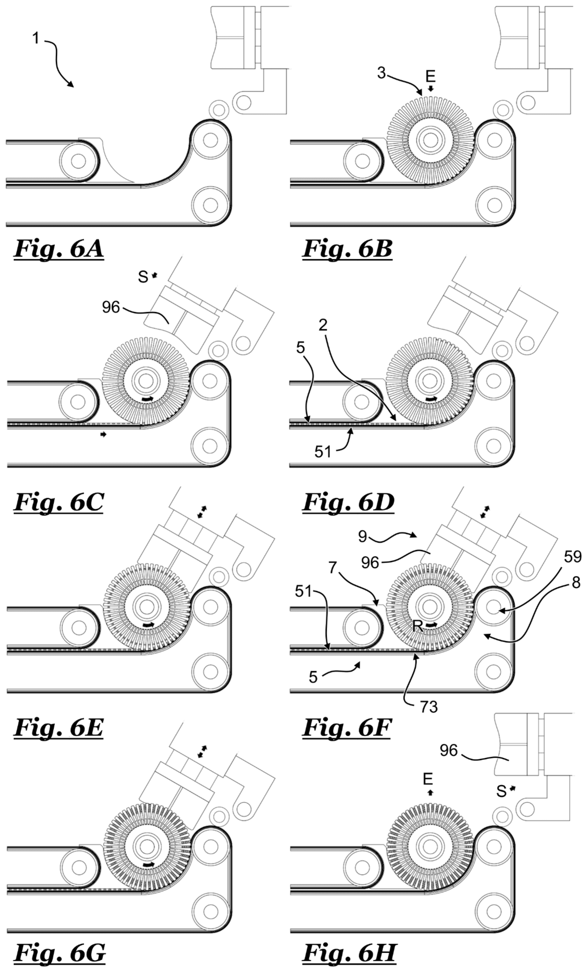

Die Figuren 6A bis 6H zeigen verschiedene Zustände einer vierten Ausführung einer Vorrichtung zum Einbringen einer Wickelmatte in ein rotierbares Übertragungswerkzeug. Die vierte Ausführung ähnelt der zweiten Ausführung und unterscheidet sich von dieser im Wesentlichen durch die Umlenkeinrichtung 8. Die Umlenkeinrichtung 8 ist durch das erste bandförmige Transportmittel 5 realisiert. Das erste bandförmige Transportmittel 5 weist eine Umlenkrolle 59 auf, die sich bezüglich der von der Transportfläche 51 aufgespannte Ebene auf der gleichen Seite wie das Wickelzentrum 31 befindet. Dadurch umschlingt das erste bandförmige Transportmittel 5 das Übertragungswerkzeug zwischen der Übergabestelle 73 und der oberen Umlenkrolle 59. Auf der gleichen Seite wie die Umlenkrolle 59 ist auch der Stempel 96 angeordnet.

Der Stempel 96 unterscheidet sich von dem Stempel 92 im Wesentlichen nur durch seine Ausrichtung. Der Stempel 92 der zweiten Ausführung ist im Wesentlichen parallel zur Förderrichtung F linearbeweglich. Der Stempel 96 der vierte n Ausführung ist im quer zur Förderrichtung F linearbeweglich. Zum Einsetzen und/oder Entnehmen des Übertragungswerkzeugs in der Einsetz- und Entnahmerichtung E ist der Stempel 96 durch eine Schwenkbewegung S in eine Freigabestellung verlagerbar, wie in den Figuren 6A, 6B und 6H dargestellt.

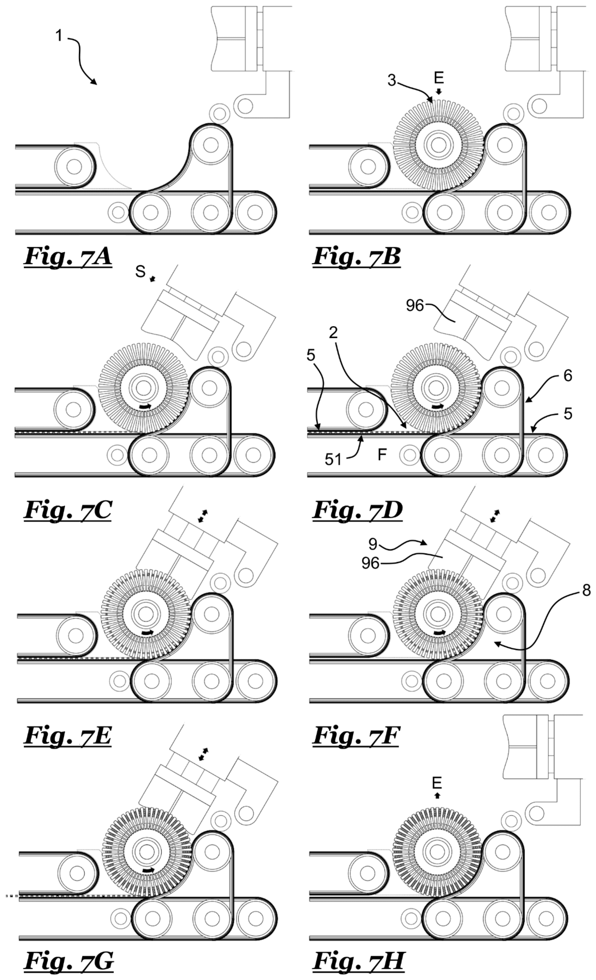

Die Figuren 7A bis 7H zeigen verschiedene Zustände einer fünften Ausführung einer Vorrichtung zum Einbringen einer Wickelmatte in ein rotierbares Übertragungswerkzeug. Von der vierten Ausführung unterscheidet sich die fünfte Ausführung im Wesentlichen nur dadurch, dass die Umlenkeinrichtung 8 durch das zweite bandförmige Transportmittel 6 realisiert ist (und nicht durch das erste 5). Das zweite bandförmige Transportmittel 6 erstreckt sich zwischen einer Übergabewelle 56 und der oberen Umlenkrolle 59.

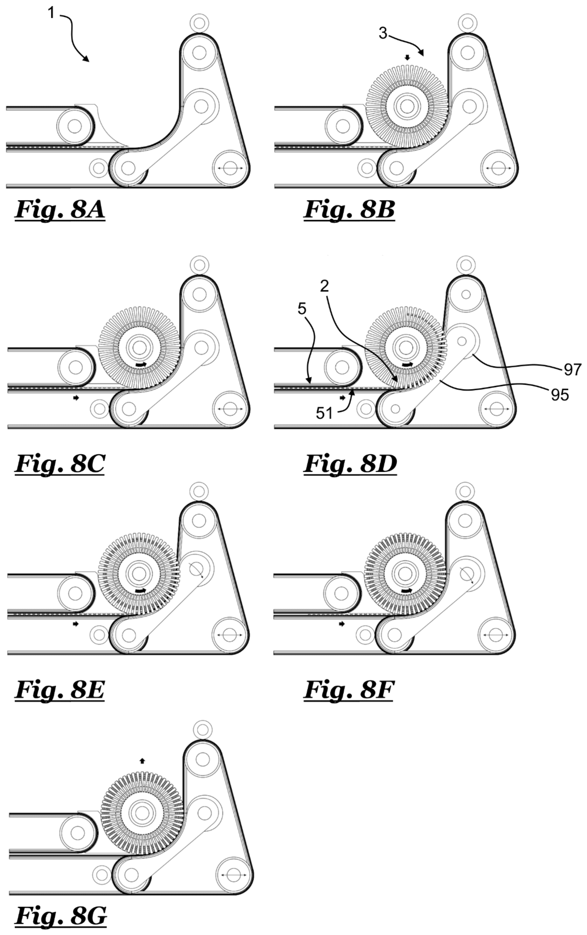

Die Figuren 8A bis 8G zeigen verschiedene Zustände einer sechsten Ausführung einer Vorrichtung zum Einbringen einer Wickelmatte in ein rotierbares Übertragungswerkzeug. Von der ersten Ausführung gemäß der Figuren 1, 2 und 3A bis 3H unterscheidet sich die hier abgebildete Vorrichtung im Wesentlichen nur durch den Hebel 95 und das Stützrad 97, mit denen in das zweite bandförmige Transportmittel 6 von einem tief in das Übertragungswerkzeug 3 eintauchbar ist. Insbesondere können der Hebel 95 und/oder das Stützrad 97 zwischen einer Wickelstellung und einer Freigabestellung verlagerbar sein. Das Stützrad 97 ist an dem Hebel 95 gelagert, der schwenkbar ist, um die Eintauchtiefe des Stützrads 97 einzustellen. Der Hebel 95 kann eine Gegenhaltekontur bereitstellen, entlang der das zweite bandförmige Transportmittel 6 abgestützt ist.

Das zweite bandförmige Transportmittel 6 kann relativ zu dem ersten bandförmigen Transportmittel 5 ortsfest gelagert sein, wobei der Umfangswinkel, mit dem die Führungseinrichtung 7, das erste und das zweite bandförmige Transportmittel 6, 8 das Übertragungswerkzeug 3 umschlingen, nicht mehr als 180° beträgt, sofern sich der Hebel 95 und/oder gegebenenfalls das verstellbare Stützrad 97 nicht in der aktiven Wickelstellung befindet. In der aktiven Wickelstellung wird durch das Stützrad 97 der umschlingende Umfangswinkel im Bereich des zweiten bandförmigen Transportmittels 8 vergrößert. Anders als bei den anderen Ausführungen ist die Entnahme des mit der Wickelmatte 2 umwickelten Übertragungswerkzeugs 3 bereits in Figur 8G dargestellt.

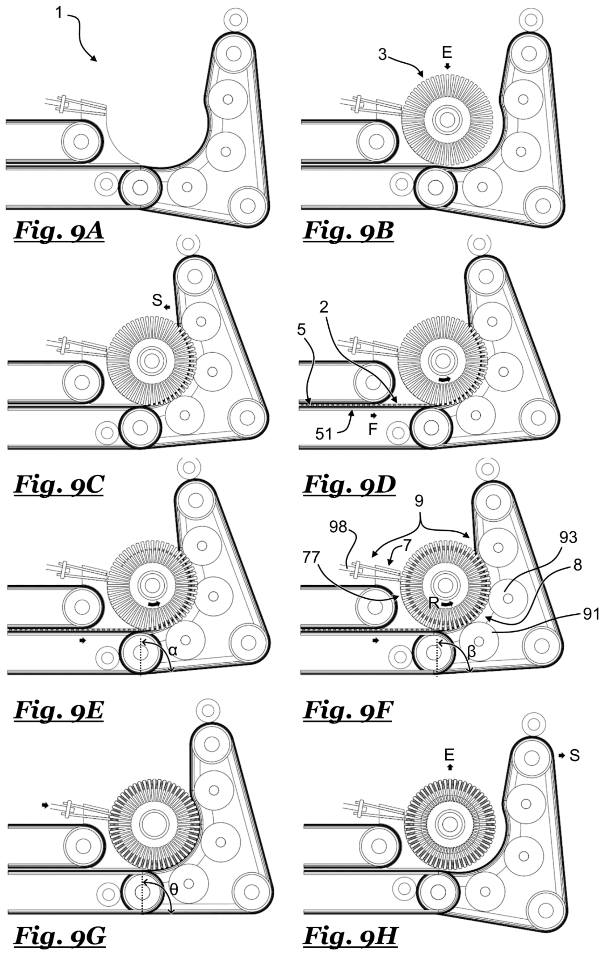

Die Figuren 9A bis 9H zeigen verschiedene Zustände einer siebten Ausführung einer Vorrichtung zum Einbringen einer Wickelmatte in ein rotierbares Übertragungswerkzeug. Von der Ausführung gemäß der Figuren 1, 2 und 3A bis 3H unterscheidet sich die hier abgebildete Vorrichtung im Wesentlichen nur dadurch, dass die Einpressvorrichtung 9 zusätzlich einen Stempel 98 umfasst. Der Stempel 98 ist bezüglich des Wickelzentrums 31 gegenüber dem zweiten bandförmigen Transportmittel 6 angeordnet. Es kann zweckmäßig sein, dass der Stempel 98, wie abgebildet, in der Rührungseinrichtung 7 linearbeweglich gelagert ist. Der Stempel 98 kann im Bereich der Gleitfläche 77 in die die Ringnuten 33 und/oder Radialnuten 30 einfahrbar sein.

Der Planierstempel 98 können beispielsweise in die aktive Stellung ausgefahren werden, nachdem ca. 75% der Längsstege einer Wickelmatte 2, insbesondere in mehreren Lagen, auf das Übertragungswerkzeug gewickelt wurden. Es kann zweckmäßig sein, dass diese Ausführung diskontinuierlich arbeitet, wenn der Stempel 98 (Planierstempel) verwendet wird. Der Planierstempel 98 drückt die äußerste Windung auf ein gewünschtes Maß in das Übertragungswerkzeug ein. Mit einer solchen Vorrichtung wird die Wickelmatte 2 also zunächst während einer Rotationsbewegung R des Übertragungswerkzeugs 3 durch das zweite Transportmittel 6 in das Übertragungswerkzeug 3 hineingedrängt. Dann wird die Rotationsbewegung unterbrochen und die Wickelmatte wird nach der Rotationsbewegung durch den Planierstempel 98 in das Übertragungswerkzeug 3 hineingedrängt.

Eine solche Ausführung kann insbesondere für Wickelmatten 2 mit großen Drahtquerschnitten verwendet werden, um eine besonders hohe Einpresskraft für Einbringen der Lagen der Wickelmatte 2 in das Übertragungswerkzeug 3 bereitzustellen. Die Einpresseinrichtung 9 braucht dann mit dem zweiten bandförmigen Transportmittel 6, insbesondere dem hintere Stützrad 93, nicht tief in das Übertragungswerkezug eintauchen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichen

- 1: Vorrichtung
- 2: Wickelmatte
- 3: Übertragungswerkzeug
- 5: erstes bandförmiges Transportmittel
- 6: zweites bandförmiges Transportmittel
- 7: Führungseinrichtung (Führungskeil)
- 8: Umlenkeinrichtung
- 9: Einpresseinrichtung
- 31: Wickelzentrum
- 56: Übergabewelle
- 59: obere Umlenkrolle
- 70: drittes bandförmiges Transportmittel
- 71: Niederhaltefläche
- 72: dritte Transportfläche
- 73: Übergabestelle
- 75: Spalt
- 76: Spalt
- 77: Gleitfläche
- 82: keilförmige Rampe
- 84: Schildfläche
- 86: Lauffläche
- 90: Anpressfläche
- 91: vorderes Stützrad
- 92: Stempel
- 93: hinteres Stützrad
- 94: Stempel
- 95: Hebel
- 96: Stempel
- 97: Stützrad
- 98: Stempel

- E: Einsetz-/Entnahmebewegung
- F: Förderrichtung
- R: Drehrichtung
- S: Schwenkbewegung
- α: erster Zustellwinkel
- β: zweiter Zustellwinkel
- θ: dritter Zustellwinkel

## Patentansprüche

1. Vorrichtung (1) zum Einbringen einer Wickelmatte (2) in ein rotierbares Übertragungswerkzeug (3), umfassend
- ein erstes bandförmiges Transportmittel (5) zum Heranführen der Wickelmatte (2) an das Übertragungswerkzeug (3), wobei das erste bandförmige Transportmittel (5) eine ebene Transportseite (51) zum Kontaktieren der Wickelmatte (2) aufweist;
- eine Umlenkeinrichtung (8), die dazu ausgelegt ist, die Wickelmatte (2) in einem vorbestimmten Umfangsabschnitt in ein einem Kontakteingriff mit dem Übertragungswerkzeug (3) zu halten; und
- wenigstens eine Einpresseinrichtung (9), die dazu ausgelegt ist, die Wickelmatte (2) in das Übertragungswerkzeug (3) hinein zu drängen.

2. Vorrichtung (1) nach Anspruch 1, **dadurch gekennzeichnet, dass** die Umlenkeinrichtung (8) ein bandförmiges Transportmittel, insbesondere das erste bandförmige Transportmittel (5) oder ein zweites bandförmiges Transportmittel (6), umfasst.

3. Vorrichtung (1) nach einem der vorstehenden Ansprüche, **dadurch gekennzeichnet, dass** die Umlenkeinrichtung, insbesondere das bandförmige Transportmittel, vorzugsweise das erste bandförmige Transportmittel (5) oder das zweite bandförmiges Transportmittel (6), in einer Wickelstellung das Übertragungswerkzeug (3) teilweise umschlingt,
wobei vorzugsweise die Umlenkeinrichtung (8), insbesondere das bandförmige Transportmittel, aus der Wickelstellung in eine Freigabestellung zum Einsetzen und/oder Entnehmen des Übertragungswerkzeugs (3) verlagerbar ist.

4. Vorrichtung (1) nach einem der vorstehenden Ansprüche, **dadurch gekennzeichnet, dass** die Vorrichtung ferner eine Führungseinrichtung (7) umfasst, die eine gegenüber dem ersten bandförmigen Transportmittel (5) angeordnete Niederhaltefläche (71) aufweist, die sich in einer Förderrichtung (F) zu einer tangentialen Übergabestelle (73) erstreckt, wo das erste bandförmige Transportmittel (5) im Wesentlichen tangential auf das Übertragungswerkzeug (3) trifft.

5. Vorrichtung (1) nach Anspruch 4, **dadurch gekennzeichnet, dass** die Führungseinrichtung (7) eine an den Außenumfang (39) des Übertragungswerkzeugs (3) angepasste Gleitfläche (77) aufweist, die, insbesondere in der Wickelstellung, das Übertragungswerkzeug (3) gemeinsam mit Umlenkeinrichtung (8) sowie gegebenenfalls der Einpresseinrichtung (9), teilumfänglich umgibt,
wobei insbesondere die Gleitfläche (77) mit der Umlenkeinrichtung (8) und der Einpresseinrichtung (9) einen Umfangswinkel von wenigstens 90°, insbesondere wenigstens 135°, vorzugsweise wenigstens 180°, aufspannt.

6. Vorrichtung (1) nach einem der vorstehenden Ansprüche, **dadurch gekennzeichnet, dass** die wenigstens eine Einpresseinrichtung (9) dazu ausgelegt ist, der Wickelmatte (2) eine auf ein Wickelzentrum (31) des Übertragungswerkzeug (3) gerichteten Zentripetalbewegung aufzuprägen.

7. Vorrichtung (1) nach Anspruch 6, **dadurch gekennzeichnet, dass** die wenigstens eine Einpresseinrichtung (9) ein zweites bandförmiges Transportmittel (6) umfasst.

8. Vorrichtung (1) nach einem der vorstehenden Ansprüche, **dadurch gekennzeichnet, dass** die wenigstens eine Einpresseinrichtung (9) einen bezüglich des Wickelzentrums (31) radialbeweglichen Stempel (92, 94, 96, 98) umfasst.

9. Verfahren zum Einbringen einer Wickelmatte (2) in ein Übertragungswerkzeug (3), insbesondere mit einer Vorrichtung nach einem der vorstehenden Ansprüche, wobei
- die Wickelmatte (2) zunächst an das Übertragungswerkzeug (3) herangeführt wird, wobei die Wickelmatte (2) mit einer ebenen Transportseite (51) eines ersten bandförmigen Transportmittels (5) in Eingriff steht,
- die Wickelmatte (2) sodann in einem Kontakteingriff mit dem Übertragungswerkzeug (3) gehalten wird, wobei das Übertragungswerkzeug (3) in einer Drehrichtung (R) um ein Wickelzentrum (31) rotiert, und wobei
- die Wickelmatte (2) während oder nach Abschluss der Rotationsbewegung des Übertragungswerkzeugs (3) in das Übertragungswerkzeug (3) hineingedrängt wird.

10. Verfahren nach Anspruch 9, **dadurch gekennzeichnet, dass** das Übertragungswerkzeug (3) kontinuierlich rotiert und die Wickelmatte (2) während der Rotationsbewegung des Übertragungswerkzeugs (3) in das Übertragungswerkzeug (3) hineingedrängt wird.
